# EUROPEAN PATENT APPLICATION

(11) **EP 3 533 306 A1**
(43) Date of publication of application: **04.09.2019**
(21) Application number: 17182458.4
(22) Date of filing: 20.07.2017
(51) Int. Cl.: A01B 59/00, B60D 1/64

(54) **EQUIPMENT FOR SERVICES INTERCONNECTIONS OF TRACTOR-TRAILER COMBINATIONS**

(71) Applicant: Fluid Power Design Limited, Grantham NG31 7LE (GB)
(72) Inventor: TURLEY, Edward Paul, Kings Cliffe Peterborough, PE8 6XH (GB)
(74) Representative: Coles, Graham Frederick

(57) **Abstract**

Equipment (1) for services interconnection of a tractor-trailer combination has an arm (2) mounted for sliding lengthwise transversely of the trailer-front on bearings (3) of a horizontal guide (4), with its leading end carrying connectors for services connections from the tractor. The arm (2) is restrained against damaging lateral forces in each of its extended and unextended conditions by projection-within-socket engagement between pins (10) and pin-receiving holes (11) or slots. In an adaptation of the equipment (40), the leading end of an extending arm (45) has a connector plate (46) that carries services-connectors (47-48) outwardly and downwardly beyond the side of the trailer for access from ground-level. The trailing end of the arm (45) is pivoted (50) to a slider (51) that slides along an upwardly-inclined guide (52) with an intermediate location of the arm (45) constrained to slide along a fixed horizontal rail (54) so as to establish a downward inclination of the arm (45).

## Description

This invention relates to equipment for services interconnection of tractor-trailer combinations.

Equipment of this nature is conventionally mounted on the front of the trailer for use in establishing services interconnection between the tractor and trailer when the trailer is coupled to the tractor. The services interconnection is established to the interconnection equipment on the front of the trailer via individual electrical, pneumatic-hose and other flexible connector lines that extend (normally in extendable-coil form) from the back of the driver's cab or other location of the tractor to be plugged into sockets or otherwise connected to the interconection equipment when the tractor and trailer are coupled together.

In order to avoid the necessity for the driver or other person when connecting or disconnecting the interconnection, to clamber onto the tractor-trailer combination between the tractor and the trailer, it is common for the sockets and other connectors of the interconnection equipment to be mounted on a moveable services-connector plate. The plate is retained in a central, 'normal' or 'running' location when the tractor-trailer is moving or is parked, but is moveable laterally from this location across the front of the trailer into an 'extended', or 'deployed' location to one side of the trailer whenever connections to it are to be established or otherwise changed. This makes the connector-plate more readily accessible to the driver or other person without requiring them to clamber or lean excessively into the space between the tractor and trailer to make the change. More especially, the services-connector plate may be mounted on an arm or other member which is slidable or otherwise moveable relative to the mounting of the equipment to locate the plate outwardly, and desirably downwardly, beyond the side of the tractor-trailer combination at a height and distance that enables the driver or other person comfortable and ready-access to the connector-plate while standing on the ground alongside the tractor-trailer combination.

It has been found with previous equipment proposals that there is a problem that bearings which support the connector-plate in its sliding or other movements may be subject to damage owing to undue strain from vibrations and other shocks, and from forces applied to it by the connection lines during movement and manoeuvres of the tractor-trailer combination. It is an object of the present invention to reduce the likelihood of such damage.

According to the present invention, there is provided equipment for services interconnection of a tractor-trailer combination, wherein a moveable connector-plate or other member of the services interconnection is restrained in a defined location from movement relative to its mounting during movement and manoeuvring of the tractor-trailer combination, by at least projection-within-socket engagement in the defined location between the connector-plate or other member and the mounting.

The projection-within-socket engagement may be between one or projecting elements of the connector-plate or other member of the services-interconnection equipment, and respective sockets of the mounting. Alternatively, the projection-within-socket engagement may be between one or more sockets of the mounting, and respective projecting elements of the moveable connector-plate or other member of the services-interconnection equipment. In either case, the one or more projecting elements may be pins, and the sockets may be respective holes or slots to receive the projecting elements. Moreover, each projecting element or pin may have a conical or otherwise-shaped leading end to facilitate entry and alignment of it with the relevant socket, hole or slot, as the moveable connector-plate moves into the defined location. Each conical pin serves individually to restrain movement in four lateral planes (upwards, downwards, forwards and backwards), whereas two pins spaced apart, or a single flat plate to engage in a slot, can be used to restrain rotational as well as other movements.

The defined location may be specifically that in which the connector-plate or other member of the services interconnection is retained in its 'normal' or 'running' location when the tractor-trailer is moving or is parked. But restraint may be provided at least in part, similarly by means of pins or other projecting elements or one or more flat plates in other locations, for example when the connector-plate or other member of the services interconnection is 'extended', or 'deployed', or is in some intermediate location between the 'normal' or 'running' location and the 'extended' or 'deployed' location. Similarly, or additionally, forces on the moveable services-connector-plate or other member may be at least partly restrained while the moveable plate or other member is in its 'normal' or 'retracted' location, by projection-within-socket engagement that occurs in that location between the moveable services-connector plate or other member and part of the mounting of the services-interconnection equipment.

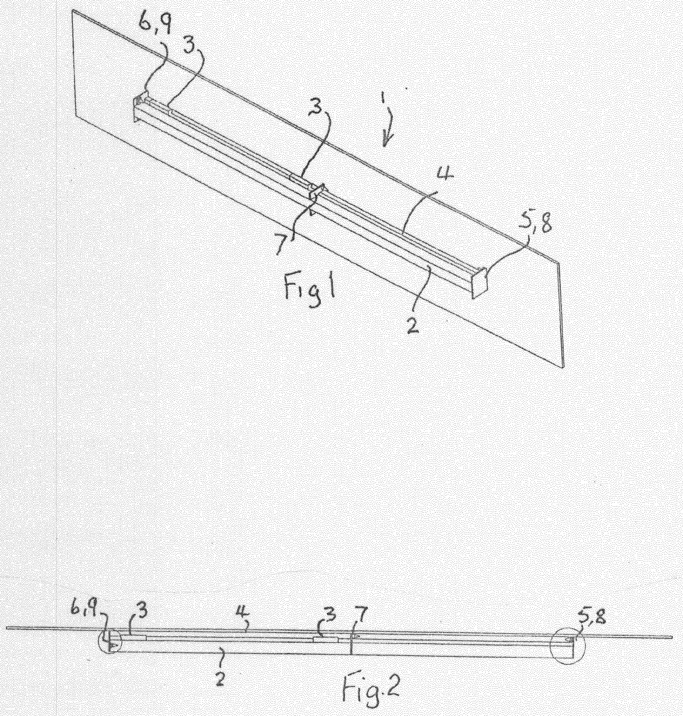

Equipment for services interconnection of tractor-trailer combinations, according to the present invention, will now be described by way of example with reference to the accompanying drawings, in which Figures 1 to 3 are, respectively, simplified representations in perspective view, plan view and front elevation of extendable interconnection equipment according to the present invention for mounting on the front of a trailer of a tractor-trailer combination, to enable manual connection and disconnection of services to and from the trailer via individual connection lines (not shown), the equipment being shown in the non-extended or retracted condition it normally occupies when the tractor-trailer is parked, manoeuvring or in motion.

Figures 4a and 4c represent (to a larger scale) details of the interconnection equipment at opposite leading and trailing ends respectively of locations that are graphically encircled in Figure 2

Figures 5 to 7 are simplified representations respectively in perspective view, plan view and front elevation of the interconnection equipment of Figures 1 to 3, when the equipment is in its 'deployed' or extended condition from its 'normal' condition;

Figures 8a to 8c represent (to the enlarged scale) details of the interconnection equipment at respective locations that are graphically encircled in Figures 5 and 6;

Figure 9 is illustrative of part of an implementation of equipment according to the invention for services interconnection of a tractor-trailer combination;

Figure 10 is a view of equipment according to the invention for mounting on the front of a trailer;

Figure 11 is illustrative of the equipment of Figure 10 mounted on the front of a trailer of a tractor-trailer combination to extend laterally of the trailer, the equipment being shown in its 'normal' or 'running' condition;

Figure 12 is a view corresponding to Figure 11 with the extendable equipment shown in its 'deployed' or 'extended' condition; and

Figures 13 and 14 are illustrative of the use of plates engaged within slots to provide restraint and stability to the moving arm of interconnection equipment in accordance with the present invention.

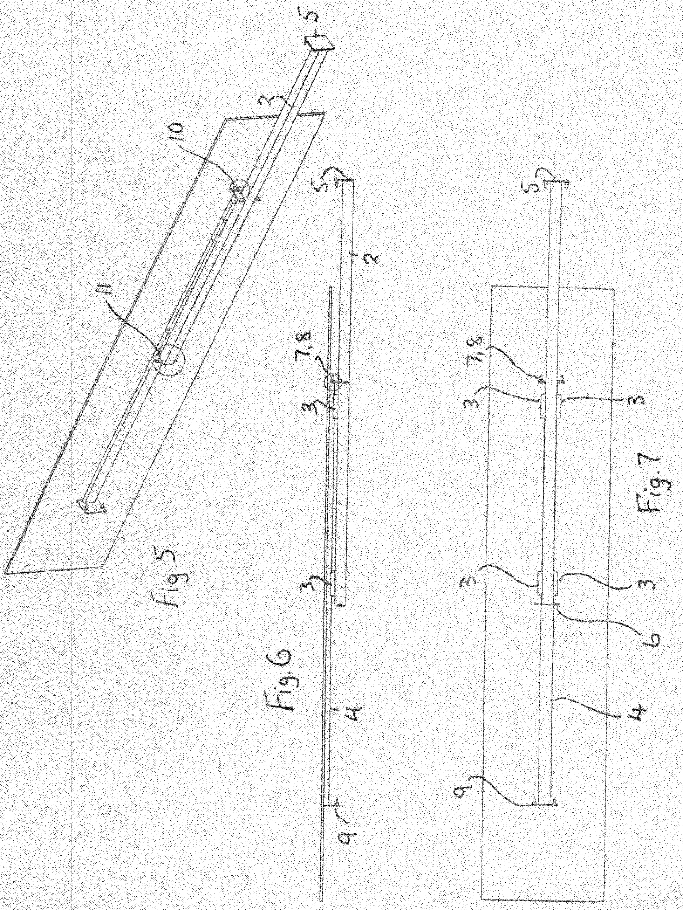

Referring to Figures 1 to 3, the interconnection equipment 1 in this simplified example involves an elongate arm 2 that is mounted for sliding back and forth on bearings 3 along a guide 4 that extends horizontally widthwise of the front of the trailer. The arm 2 has brackets 5 and 6 at its leading and trailing ends respectively, and a bracket 7 at an intermediate location of its length for meeting in pairs face-to-face with brackets 8 and 9 at the two ends of the guide 4, in dependence upon whether the arm 2 is in its 'normal', unextended condition as shown in Figures 1 to 3, or in its 'extended' condition as shown in Figures 5 to 7. The bracket 5 at the leading end carries sockets and other connectors (not shown) by which services connections from the tractor are made to the trailer.

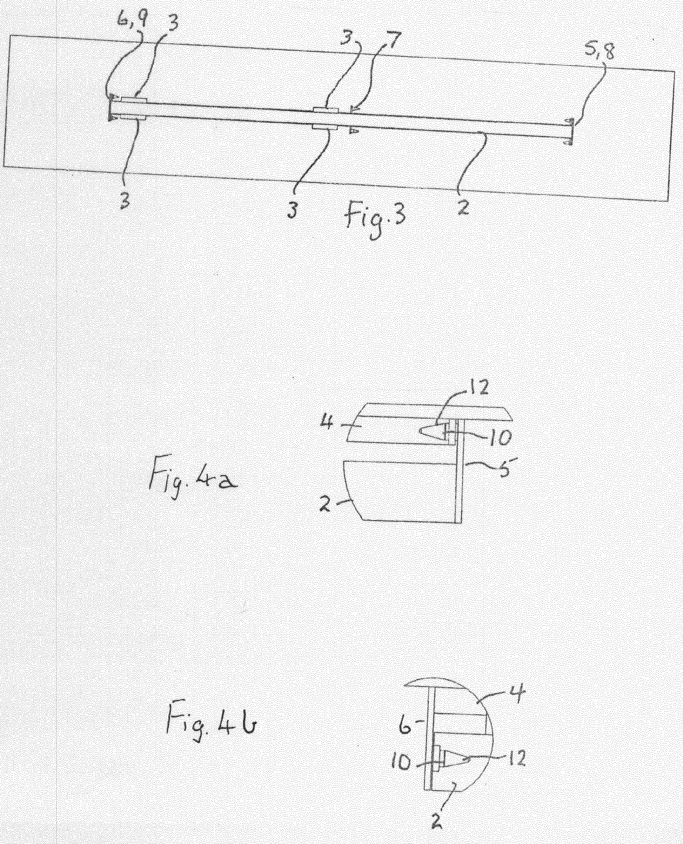

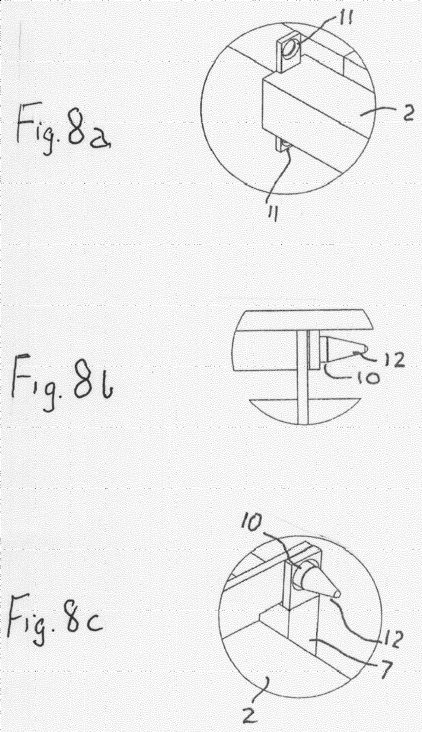

In the normal unextended condition of the arm 2 shown in Figures 1 to 3 the pair of brackets 5 and 8 are paired together face-to-face at the leading end of the arm 2, whereas the pair of brackets 6 and 9 are paired together face-to-face at the trailing end of the arm 2. In the extended condition of the arm 2 shown in Figures 5 to 7, the pair of brackets 7 and 8 are paired together face-to-face at the intermediate locations of the arm 2 and guide 4. In each pairing, two pins 10 of one of the brackets engage in respective sockets 11 illustrated in Figure 8a) of the other bracket. More especially each pin 10 has a conical leading end 12 (as illustrated in Figures 4a and 4b and Figures 8b and 8c) so as more-readily to locate and engage fully (as illustrated in Figures 8b and 8c) in the relevant socket as the paired brackets close onto one another face-to-face; each socket may be a circular hole as illustrated by the holes 11 of Figure 8a, or a slot.

Engagement of the two pins 10 in the two sockets 11 at each face-to-face pairing of the brackets in both the unextended and the extended conditions, is of a fundamental advantage in ensuring that the arm 2 in those conditions is held firmly against any lateral movement. Lateral forces due to vibration applied to the arm 2 are restrained via the pin-socket engagement and accordingly are not transmitted to the bearings 3.

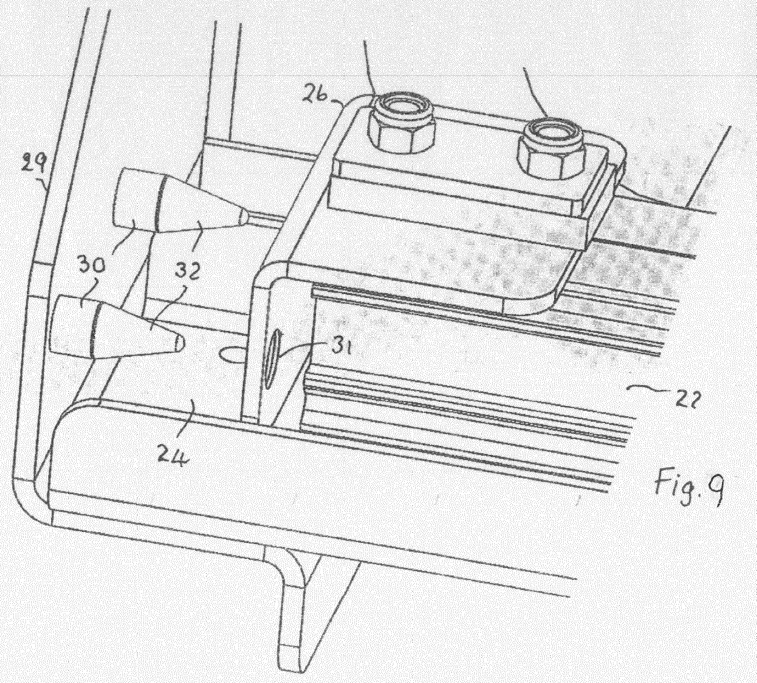

The principle of pin-socket engagement for protection of the structural components and bearings of connection equipment in tractor-trailer combinations, can be applied to afford significantly stronger and more robust structures than conveyed by the simplified representations of Figures 1 to 6, and in this respect Figure 9 is illustrative of a context more representative of such structures.

Figure 9, is illustrative of a situation with practical interconnection equipment where an arm 22 moving along a support beam 24. The beam 24 holds bearings (not shown) which guide the movement of the arm 22, and carries a bolted-on bracket 26 that is closing face-to-face onto a bracket 29 at the trailing end of the beam 24 in returning to the unextended condition of the interconnection equipment. This is just prior to engagement of a pair of pins 30 with respective holes 31 (only one shown) in the bracket 26. As the bracket 26 moves closer to the bracket 29, the conical tips 32 of the pins 30 enter the holes 31 and effect any slight adjustment to the alignment of the arm 22 required to ensure that as the movement is completed the pins 30 fully and closely engage in the holes 31. Thus, in the unextended condition this pin-socket engagement establishes for the arm 22 an advantageous force-restraining protection and stability against vibration and shock, so that these forces are not transmitted to the supporting bearings.

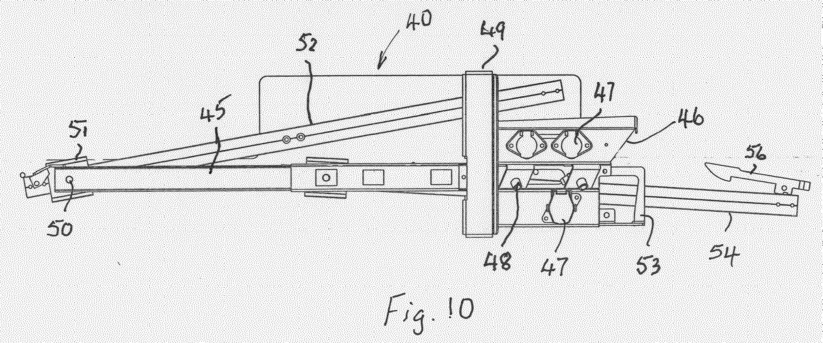

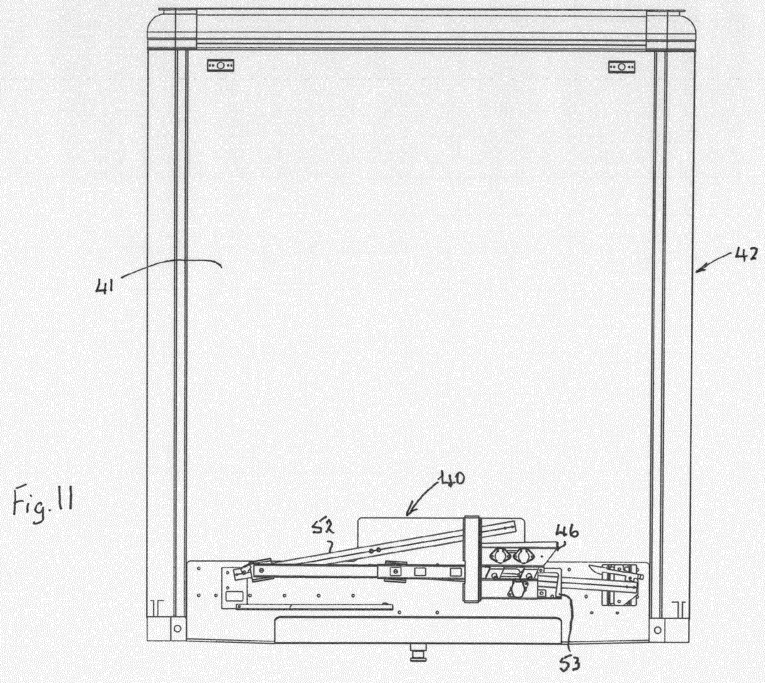

Referring to Figure 10, equipment 40 in accordance with the invention is for mounting, as illustrated by Figure 11, on the front 41 of a trailer 42. The equipment 40, as indicated more clearly in Figure 10, has an arm 45 that carries a connector plate 46 which is provided with electrical sockets 47 and pneumatic-hose connectors 48 for intercoupling with appropriate service-connection lines (not shown) from the tractor (not shown).

Pin-in-socket engagement (not shown) between for example the arm 45 and a fixed rail 49 is provided in the equipment to restrain the arm 45 from vibration and twisting under forces created with movement of the trailer in normal use.

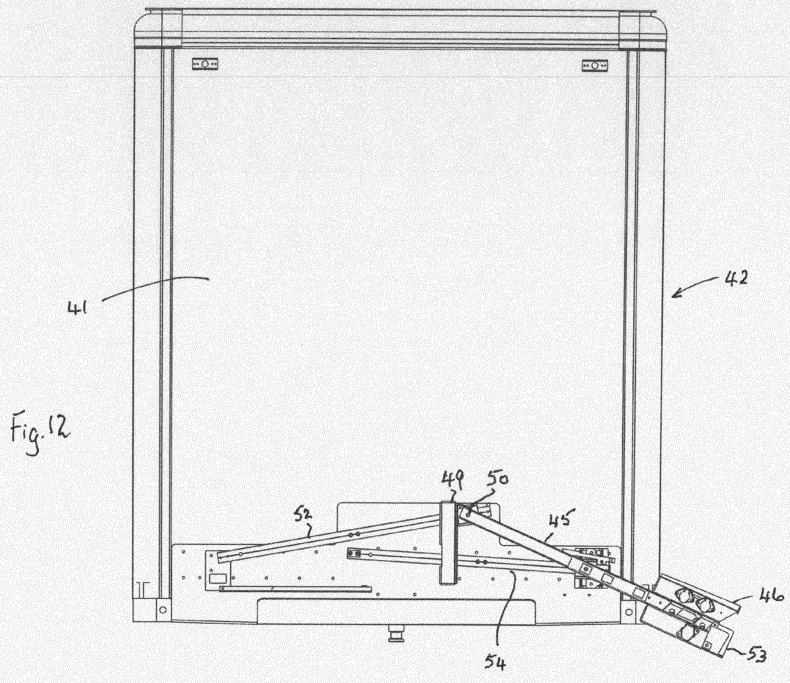

The arm 45 has a pivot 50 at its distal end with a slider 51. The slider 51 slides along an elongate guide 52 as a handle 53 on the connector plate 46 is pulled laterally across the front 41 of the trailer in extending the arm 45 widthwise of the trailer and taking the plate 46 progressively to the side of the trailer 42. Further pulling of the handle 53 brings the slider 51 to the proximal end of the guide 52 and clearing it under the rail 49 of the mounting structure of the equipment. This allows the arm 45 to pivot down on the pivot 50 into its fully extended or deployed condition as shown in Figure 12 In this condition the connector-plate 46 is clear of the side of the trailer and at a convenient height to allows the driver or other person standing on the ground to connect or disconnect the service lines with the sockets 47 and 48 on the plate 46.

The connection and disconnection of the services lines results in forces tending to push the arm 45 upwards and downwards and to twist it in both senses. Pin-in-socket engagement (not shown) between for example the arm 45, the fixed rail 49 and a fixed rail 54, is provided in the equipment to restrain the arm 45 from the upward/downward forces and twisting in this condition.

Latches with manually releasable latching arms are provided to hold the arm 45 locked in position in the retracted or normal condition, and in its deployed or extended condition. In particular, there are two latches with lever arms 55 (not shown) applied to the arm 45 and plate 46 respectively in the retracted or normal condition. Further, a manually-releasable lock with lever arm 56 is effective to retain the arm 45 and the plate 46 in the extended or deployed condition.

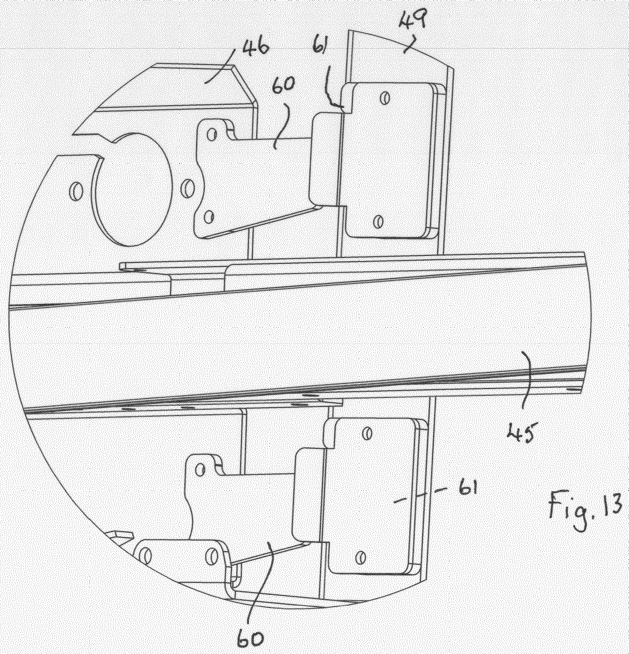

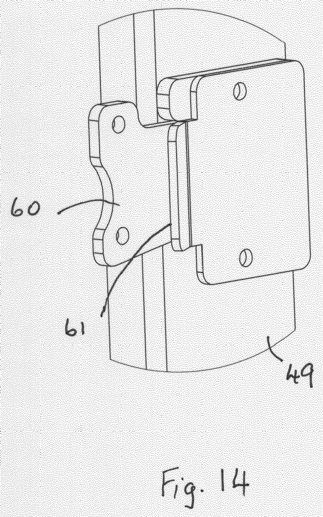

Figures 13 and 14 show use of plates 60 within slots 61 that may be used instead of pins within holes or slots for ensuring the advantageous restraint and stability against the transmission of vibration and shock via the connector plate 46 to the support bearings of the arm 45. In the illustrated circumstance the restraint and stability are provided between the arm 45 and the rail 49 of the equipment mounting.

## Claims

1. Equipment for services interconnection of a tractor-trailer combination, wherein a moveable connector-plate or other member of the services interconnection is restrained in a defined location from movement relative to its mounting during movement and manoeuvring of the tractor-trailer combination, by at least projection-within-socket engagement in the defined location between the connector-plate or other member and the mounting.

2. Equipment according to claim 1 wherein the projection-within-socket engagement is between one or more projecting elements of the connector-plate or other member of the services-interconnection equipment, and respective sockets of the mounting.

3. Equipment according to claim 1 wherein the projection-within-socket engagement is between one or more sockets of the mounting, and respective projecting elements of the moveable connector-plate or other member of the services-interconnection equipment.

4. Equipment according to claim 2 or claim 3 wherein the one or more projecting elements are pins, and the sockets are respective holes or slots to receive the pins.

5. Equipment according to claim 4 wherein each pin has a conical or otherwise-shaped leading end to facilitate entry and alignment of it with the relevant hole or slot, as the moveable connector-plate moves into the defined location.

6. Equipment according to claims 1 wherein the projection-within-socket engagement is between one or more flat plates of the connector-plate or other member of the services interconnection, and respective sockets of the mounting.

7. Equipment according to claims 1 wherein the projection-within-socket engagement is between one or more flat plates of the mounting and respective sockets of the connector-plate or other member of the services interconnection.
